# EUROPEAN PATENT APPLICATION

(11) **EP 4 661 444 A1**
(43) Date of publication of application: **10.12.2025**
(21) Application number: 24750541.5
(22) Date of filing: 30.01.2024
(51) Int. Cl.: H04W 4/40, H04W 4/02, H04W 4/029, G08G 1/16, H04W 8/08

(54) **METHOD BY WHICH NETWORK TRANSMITS MESSAGE IN WIRELESS COMMUNICATION SYSTEM, AND APPARATUS THEREFOR**

(30) Priority: 03.02.2023 US 202363443055 P; 03.02.2023 US 202363443056 P
(71) Applicant: LG Electronics Inc., Yeongdeungpo-gu Seoul 07336 (KR)
(72) Inventor: KIM, Heejin, Seoul 06772 (KR); SEO, Hanbyul, Seoul 06772 (KR); KIM, Yunjong, Seoul 06772 (KR)
(74) Representative: Mooser, Sebastian Thomas
(86) International application number: PCT/KR2024/001420
(87) International publication number: WO 2024/162743

(57) **Abstract**

Disclosed are a method by which a network transmits a message in a wireless communication system, and an apparatus therefor, according to various embodiments. Disclosed are a method and apparatus, the method comprising the steps of: receiving, from a user equipment, a first message including first mobility information for the user equipment; and transmitting a second message including second mobility information for the user equipment on the basis of the first message, wherein a type of the second message is determined on the basis of whether the second mobility information includes same mobility information as the first mobility information.

## Description

### [Technical Field]

The present disclosure relates to a method of transmitting, by a network, a message containing mobility information configured by modifying/supplementing mobility information contained in a message received from a terminal in a wireless communication system, and an apparatus therefor.

### [Background Art]

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

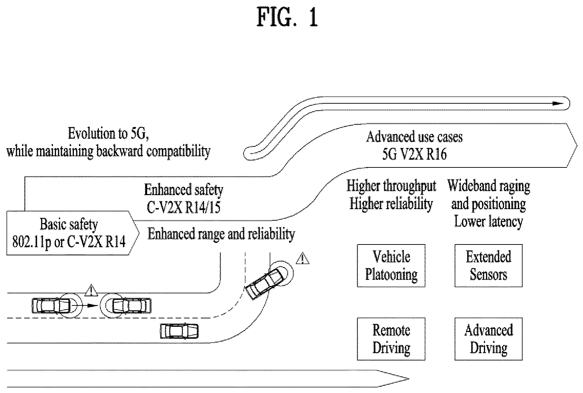

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### [Disclosure]

### [Technical Problem]

An object of the present disclosure is to provide a method of transmitting and receiving messages more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### [Technical Solution]

In one aspect of the present disclosure, provided herein is a method of transmitting a message by a network in a wireless communication system. The method may include receiving a first message containing first mobility information related to a user equipment (UE) from the UE, and transmitting a second message containing second mobility information related to the UE based on the first message, wherein a type of the second message may be determined based on whether the second mobility information comprises same mobility information as the first mobility information.

Alternatively, the type of the second message may be determined to be a first type for recognition of a transmission entity of the message, or a second type for delivering object information or event information detected by the transmission entity of the message.

Alternatively, based on the second mobility information being different from the first mobility information, the type of the second message may be determined to be the second type, wherein the second message may contain the second mobility information converted into the object information detected by a sensor.

Alternatively, based on the second mobility information comprising the same mobility information as the first mobility information, the type of the second message may be determined to be the first type same as a type of the first message.

Alternatively, based on the second mobility information being different from the first mobility information, the second message may further contain indication information indicating that the second message is related to the first message.

Alternatively, the message of the first type may be a Common Awareness Message (CAM), Basic Safety Message (BSM), Vulnerable Road User Awareness Message (VAM), or Personal Safety Messaging (PSM), wherein the message of the second type may be a Collective Perception Message (CPM) or Distributed Environmental Notification Message (DENM).

Alternatively, the method may further include calculating predicted mobility information related to the UE based on the first message and a third message received from devices around the first terminal, and, based on a difference between the predicted mobility information and the first mobility information being greater than or equal to a specific threshold, updating the first mobility information with the predicted mobility information.

Alternatively, the calculating of the predicted mobility information may be performed based on that a processing capability related to prediction of a location and path of the UE is less than a specific capability threshold, or that a change in angular speed or acceleration of the UE calculated based on the first mobility information is greater than or equal to a specific change threshold.

In another aspect of the present disclosure, a network for executing the above-described message transmission method may be provided.

In another aspect of the present disclosure, a processing device for controlling a network to execute the above-described message transmission method may be provided.

In another aspect of the present disclosure, provided herein is a method of receiving a message from a network by a user equipment (UE) in a wireless communication system. The method may include transmitting a first message containing first mobility information related to the UE to the network, and receiving a second message containing second mobility information related to the UE, wherein a type of the second message may be determined based on whether the second mobility information comprises same mobility information as the first mobility information.

In another aspect of the present disclosure, a non-transitory computer-readable storage medium having recorded thereon instructions for executing the above-described message reception method may be provided.

In another aspect of the present disclosure, a user equipment (UE) for executing the above-described message reception method may be provided.

In another aspect of the present disclosure, a processing device for controlling a user equipment (UE) to execute the above-described message reception method may be provided.

### [Advantageous Effects]

According to an embodiment of the present disclosure, transmission and reception of messages in a wireless communication system may be performed more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

### [Description of Drawings]

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating a method of performing communication by a server based on a message received from a UE.
FIG. 17 is a diagram illustrating a method of transmitting a message by a network based on predicted information directly predicted by the network regarding the location/predicted path of a UE
FIG. 18 is a diagram illustrating a method of receiving a message from a network by a UE.
FIG. 19 illustrates a communication system applied to the present disclosure.
FIG. 20 illustrates wireless devices applicable to the present disclosure.
FIG. 21 illustrates another example of a wireless device to which the present disclosure is applied.
FIG. 22 illustrates a vehicle or an autonomous driving vehicle applied to the present disclosure.

### [Best Mode]

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

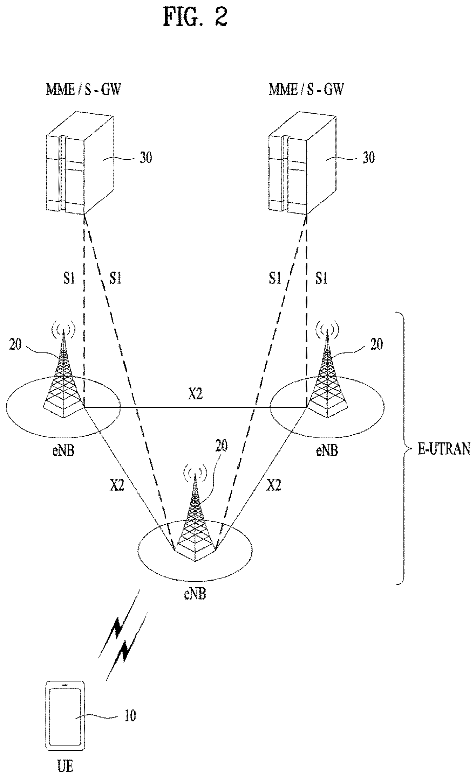

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

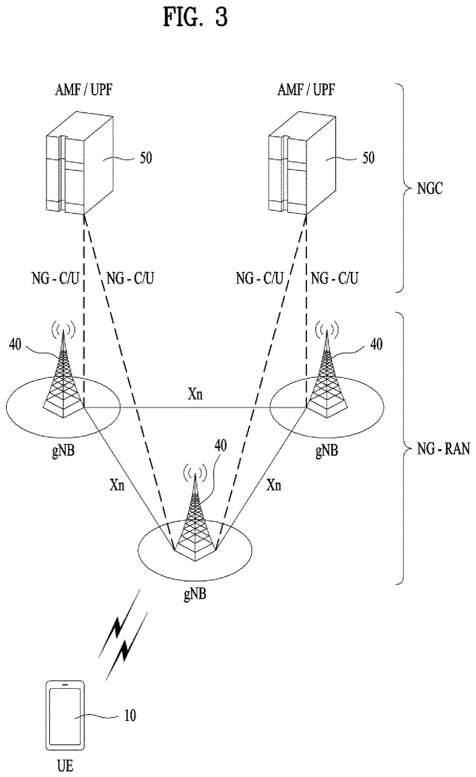

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

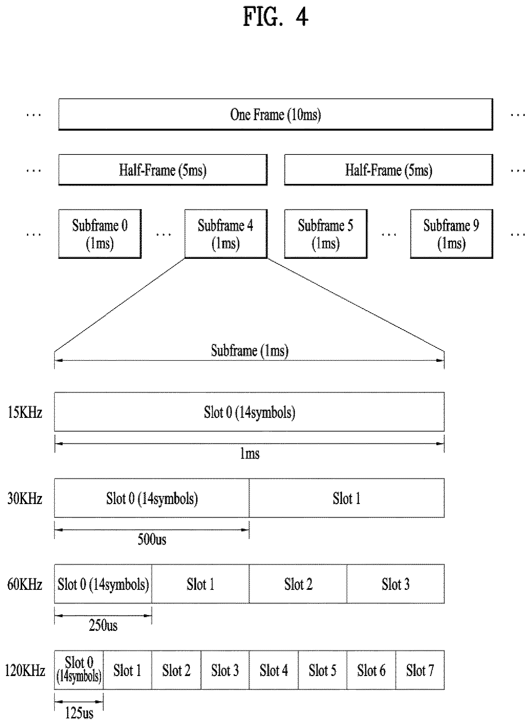

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slott}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

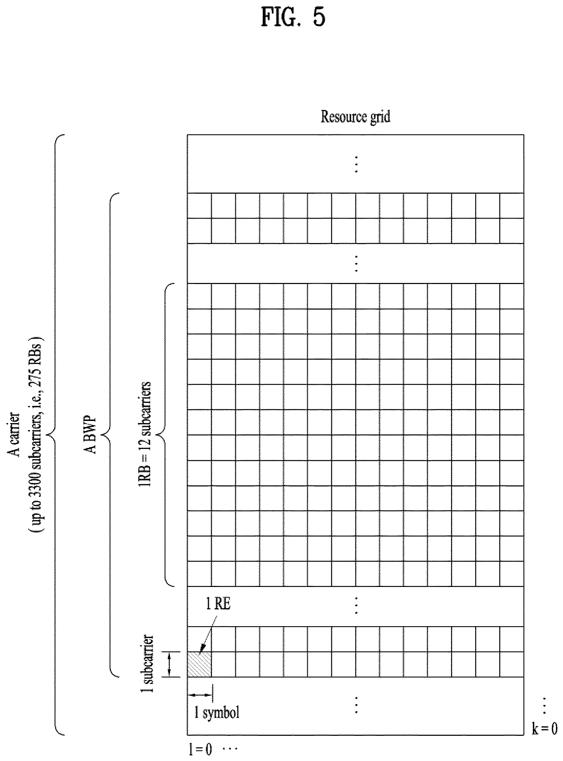

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

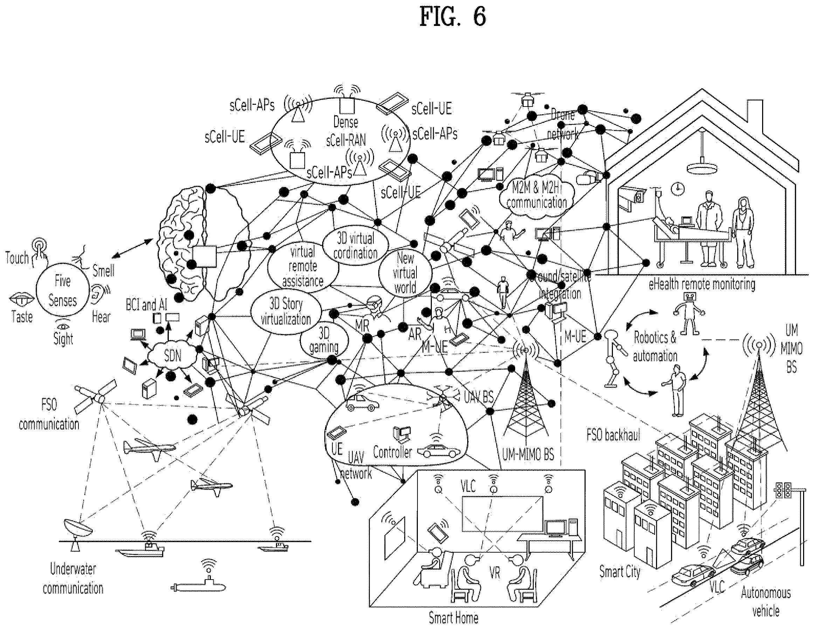

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

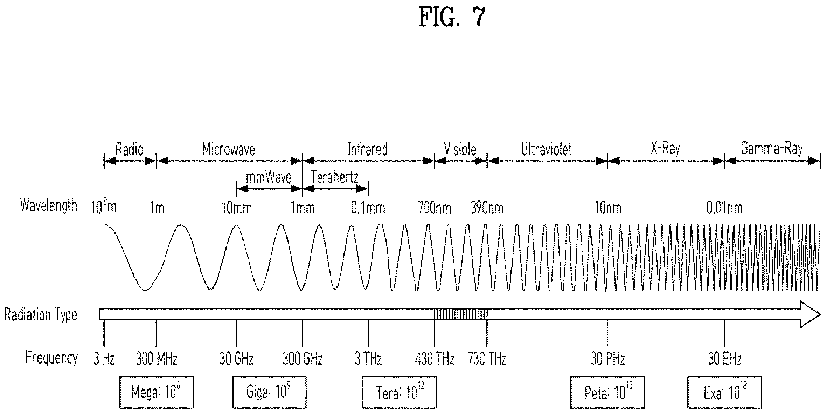

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

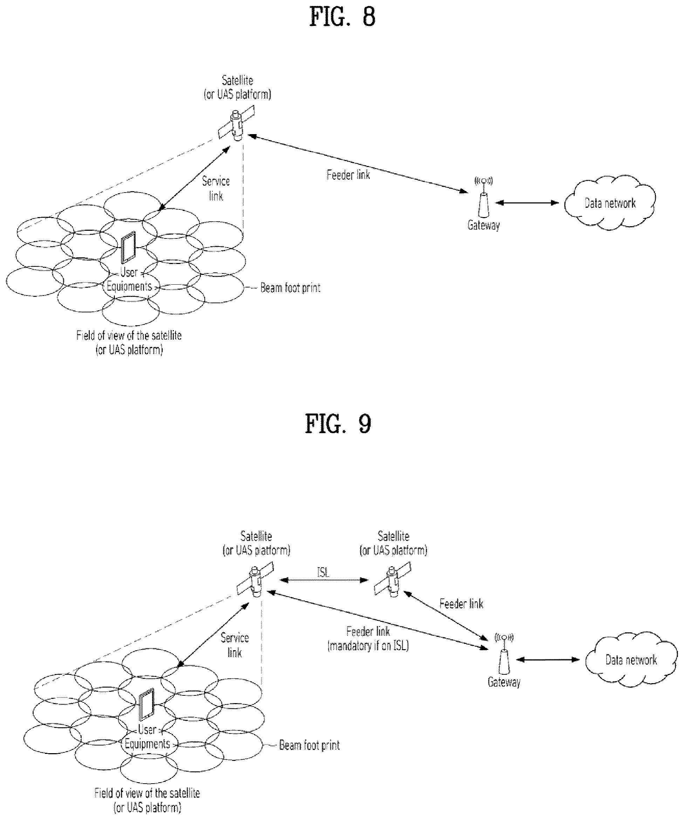

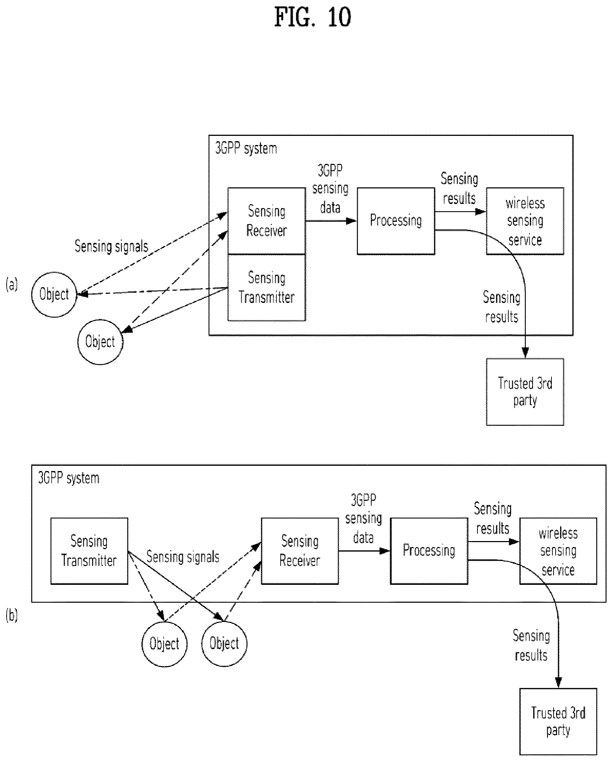

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

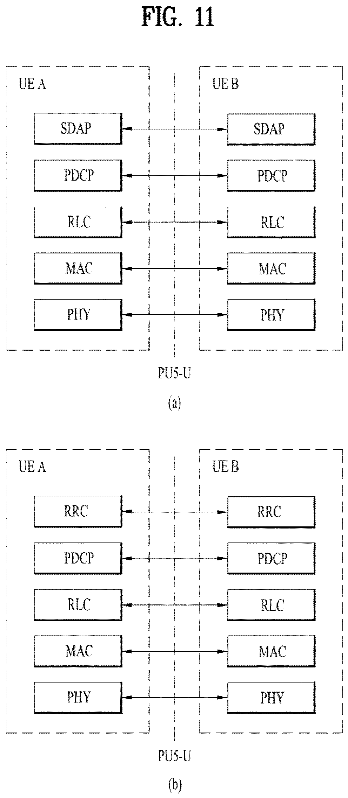

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

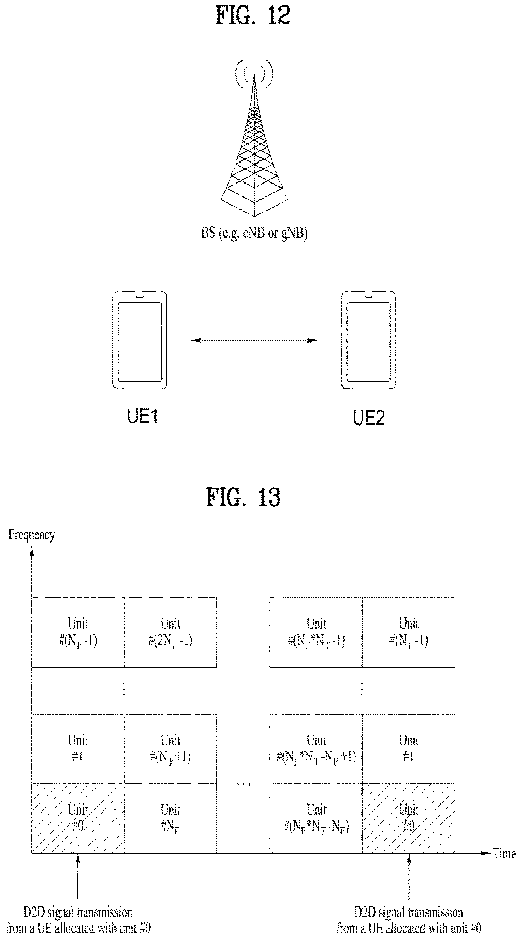

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

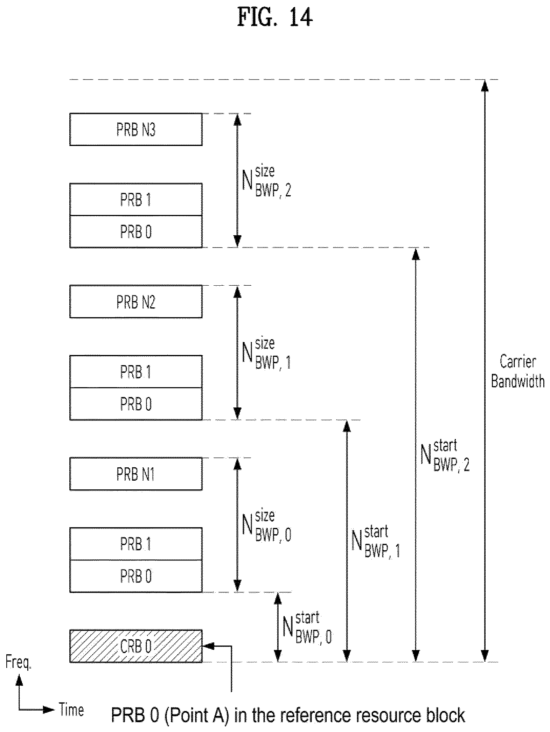

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

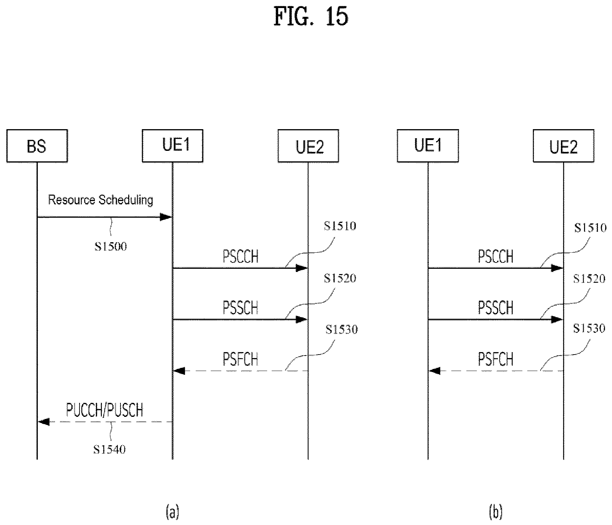

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

### Method of transmitting information about the location and predicted path of a UE by a server

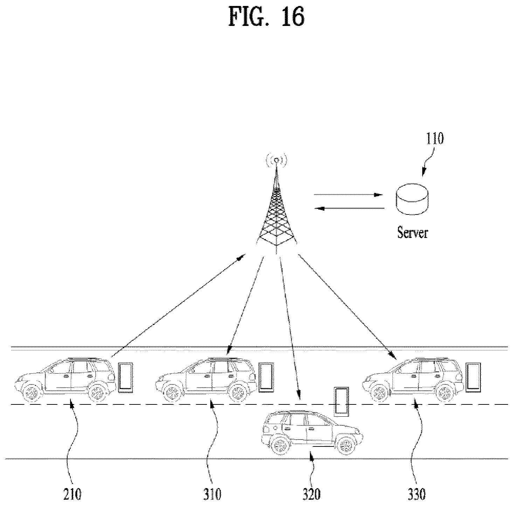

FIG. 16 is a diagram illustrating a method of performing communication by a server based on a message received from a UE.

Referring to FIG. 16, the UE 210 may calculate the location and predicted path thereof and transmit a message containing the same. Based on the information about the location and predicted path of the specific UE 210 contained in the message, neighboring UEs 310, 320, and 330 that receive the message (transmitted/forwarded via the server) may calculate the risk of collision with the UE or determine whether it is necessary to adjust their driving path. However, due to certain reasons, the accuracy/precision of the location and predicted path calculated by the UE 210 may be low. In this case, there may be issues with supporting certain services (e.g., collision warning), or it may be difficult to guarantee the quality of service. In this case, a server/MEC (Mobile Edge Computing) 110 connected to the UE 210 may directly calculate/predict the location and predicted path of the UE 210 based on the mobility information (including, for example, location, timestamp, speed, acceleration, heading, etc.) about the UE 210 contained in the message received from the UE 210, information acquired from neighboring UEs 310, 320, and 330/RSUs, and/or learning/AI algorithms available to the server/MEC/cloud 110. In this case, the server/MEC/cloud 110 may transmit a message containing the information about the directly calculated/predicted location and path of the UE 210 to the UE 210 and/or the neighboring UEs 310, 320, and 330. Thereby, the accuracy of the location and predicted path of the UE 210 may be improved and the quality of the predetermined service may be enhanced. The server/MEC/cloud 110 may calculate the location and predicted path of the UE 210 (i.e., the target UE whose location/predicted path is directly calculated) based on the state/driving information about the UE 210 obtained from messages transmitted by other UEs 310, 320, and 330/RSUs (not shown), raw data measured by cameras/LiDAR/radar installed in the other UEs/RSUs (and/or information about detected objects and/or measurement/detection time information).

The above-described operation of the server/MEC/cloud (hereinafter, referred to as "server" or "network") 110 may be required (or triggered) in at least one of the following cases:
1. The UE 210 has limited computing and/or message processing capability.
2. The tracking/prediction accuracy of the UE's location and/or path is less than or equal to a specific threshold (namely, at least one of the conditions ① to ⑤ below is satisfied):
   - ① The number/types of sensors (e.g., speed/acceleration sensor, gyroscope, barometer, magnetometer, GPS, camera, etc.) in the UE 210 are insufficient for path prediction (namely., the types and number of sensors related to the UE 210 do not meet the sensor requirements for path prediction);
   - ② Even if sensors are provided in the UE 210, the precision/accuracy of some or all of the sensors fails to meet the required level for path prediction (i.e., although the UE uses the necessary types and number of sensors, at least one of the sensors used has lower precision/accuracy than required);
   - ③ The computing power of the UE 210 is insufficient to handle the computation required for location/path prediction (e.g., the computing power of the UE 210 is lower than what is required to process AI/Levenberg-Marquardt (LM) algorithms);
   - ④ The server 110 determines that the precision/accuracy of the location and predicted path of the UE 210 tracked/predicted by the UE 210 is lower than the precision/accuracy of the location/predicted path of the UE calculated/predicted directly by the server 110, or is outside a specific error range (As described above, the server 110 is capable of directly calculating/predicting the location and predicted path of the UE 210 based on the mobility information (including, for example, location, timestamp, speed, acceleration, heading, etc.) about the UE 210 contained in the message received from the UE 210, information acquired from other UEs 310, 320, and 330/RSUs, and/or learning/AI algorithms available to the server 110);
   - ⑤ The positioning information and confidence level included in the message transmitted by the UE 210 is below a specific threshold level;
3. When it is necessary to simplify the UE operations/implementation/computation required for tracking/prediction location/path of the UE or to reduce battery consumption of the UE 210. (For example, the remaining battery power of the UE 210 is below a specific remaining power threshold, or the remaining computation processing capability of the UE 210 is below a specific threshold)
4. It is determined that the (implementation/computation) complexity of tracking/predicting the location/path of UE 210 is too high to be performed by UE 210. For example, this may be the case when at least one of the following situations ① and ② is detected.
   - ① The variation in the driving speed/acceleration of the UE 210 is very large (e.g., it is greater than or equal to a preset threshold), or a rapid change in the type of road along which driving is performed by the UE 210 is occurring or is predicted (e.g., this change may occur when the UE is driving on a winding road, on a road segment where the minimum/maximum allowable speed changes, or in narrow alleys/shoulders where vehicles share the road with pedestrians, motorcycles, or bicycles; or the UE enters a general road from an expressway, or vice versa). In other words, this may be the case when the UE 210 enters an area where the variation in the speed/acceleration of the UE is greater than or equal to a specific threshold, or such variation is expected.
   - ② The UE 210 is driving on a road type or lane where the probability of changes in traffic flow is at or above a specific level (e.g., an area where road construction or an accident occurs, a bottleneck area, etc.).
5. The number of messages received (or transmitted) by the server 110 simultaneously (or within a specific time) is less than or equal to a specific value and/or the number of UEs connected to the server is less than or equal to a specific threshold.
6. The server 110 centrally monitors/controls the situation of UEs connected to the server 110 at a higher level (e.g., neighboring UEs provide as much information as possible to the server, and the server takes responsibility for tracking the locations of the UEs, assessing collision risks, and generating warning messages).

As described above, when the server 110 detects/determines that the situation corresponds to at least one of cases 1 to 5, it may directly calculate the location/predicted path of the UE and transmit a message containing the location/predicted path of the UE 210 to the UE 210 and/or the neighboring UEs 310, 320, and 330.

Here, the location and predicted path of the UE 210 may include not only the current location of the UE 210 derived through the global positioning system (GPS) and other sensors, but also the future locations and path of the UE 210 predicted based on prediction algorithms such as those utilizing AI included in the UE 210. For example, the UE 210 may calculate at least one future location and predicted path at one or more time points (t1,...,tn) after the current time based on the current location, speed, acceleration, heading, and/or road (or surrounding) environment, and transmit a message containing the information about the calculated at least one location and predicted path. The server 110 may also predict/calculate the current and future locations/paths of the UE 210 based on the mobility information about the UE 210 (state/blood information about the UE 200 and contained in the message from the UE 210 and messages from other UEs 310, 320, and 330/RSUs). That is, the server 110 may directly predict/calculate the location/path of the UE 210 for the time (or time interval) corresponding to the location/predicted path of the UE contained in the message from the UE 210. Accordingly, even if the specific time interval is not explicitly described below for the location/predicted path directly calculated by the server 110, it is assumed in the following description that the location/predicted path directly calculated by the server 110 is obtained for a time (and/or a time interval later than the time) corresponding to the time (or a time interval) of the location/predicted path of the UE 210 contained in the message from the UE.

Hereinafter, a detailed description is provided of the types of messages used by the server, a method of configuring/adding/modifying data elements in the message, and a transmission method for the message when the server detects/determines that the situation corresponds to at least one of cases 1 to 5 described above, directly calculates the location/predicted path of the UE, and transmits a message related to the location/predicted path of the UE. Also, in the following description, the UE whose location/predicted path is directly calculated by the server 110 is referred to as a target UE.

The server 110 (or cloud/MEC (Mobile Edge Computing)) may directly calculate/predict the location/predicted path (and/or heading, speed/acceleration, curvature value, etc.) of the target UE 210 as described above, and may transmit a message containing information about the location/predicted path of the target UE 210 as calculated/determined by the server to the target UE 210/neighboring UEs 310, 320, and 330/RSUs in a unicast/multicast/broadcast manner. As described above, the server 110 may predict/calculate the location/predicted path of the target UE 210 directly based on the message from the target UE 210, messages containing sensing data from the neighboring UEs 310, 320, and 330/RSUs, and the AI/ML algorithms in the server 110.

Specifically, the server 110 may directly calculate/predict the location/predicted path of the target UE 210 and transmit a message related to the location/predicted path of the target UE 210 (or trigger the transmission of the message) when at least one of the following conditions is satisfied:

- The target UE 210 transmits a message that does not contain the information about the predicted path for a certain reason. For example, such reason may include a case where the target UE 210 has a limited computing/message processing capability, a case where the accuracy of the prediction/calculation of the location/predicted path of the target UE 210 is less than or equal to a specific accuracy threshold, or a case where the remaining battery level of the target UE 210 is below a specific critical level (i.e., power saving is necessary).

- When the server 110 recognizes/determines that the precision/accuracy of the location/predicted path contained in the message from the target UE 210 is less than a specific precision/accuracy threshold. For example, the server 110 may, as described above, calculate the location/predicted path of the target UE 210 based on the message from the target UE 210, and messages from the neighboring UEs 310, 320, and 330/RSUs (using AI, etc.), and validate/correct the precision/accuracy of the location/predicted path contained in the message from the target UE 210 based on the location/predicted path calculated directly by the server 110. That is, the server 110 may be capable of utilizing various messages collected for the target UE 210 and predicting/calculating the location/predicted path of the target UE 210 based on more complex AI according to its processing capability. Accordingly, it may predict/calculate the location/path of the target UE 210 with higher accuracy/precision than the target UE 210.

Next, in order to transmit the determined/calculated location/predicted path (and/or heading, speed/acceleration, and curvature) of the target UE 110 to the target UE 210 and/or neighboring UEs 310, 320, and 330 located around the target UE 210 (and/or other servers/clouds), the server 110 may generate/modify a message (e.g., by adding/modifying certain data elements) and transmit the message based on at least one of the following schemes.
- ① A message most recently received by the server 110 from the target UE 210 (hereinafter referred to as a forwarding message);
- (2) A message newly created (in terms of content and format of the message) by the server 110 to contain information about the location/UE status/characteristics of the target UE 210 at teh current time (or a time closest to the current time) as identified by the server 110 based on communication with the target UE 210 and/or neighboring UEs (or RSUs) (hereinafter referred to as a new message);
- ③ A message configured by modifying/complementing certain data fields/elements in a message most recently received from the target UE 210 (the UE whose location/path is predicted by the server 110) (or a message from the target UE 210) to contain information about the location/UE status/characteristics of the target UE 210 at teh current time (or a time closest to the current time) as identified by the server 110 based on communication with the target UE 210 and/or neighboring UEs (or RSUs) (hereinafter referred to as a complemented message).

For example, when the precision/accuracy of the information about the location/predicted path (for a specific point in time) contained in the message from the target UE 210 is determined to be a less than a specific position/accuracy threshold, or when the difference between the location/predicted path directly calculated/predicted by the server 110 (for a point in time corresponding to the specific point in time) and the location/predicted path contained in the message from the target UE 210 is less than or equal to a specific percent threshold (e.g., within a margin that does not impact application operations such as collision avoidance), the server 110 may transmit the message described in "①." Here, the transmission of the message described in "①" when difference between the location/predicted path directly calculated/predicted by the server 110 (for a point in time corresponding to the specific point in time) and the location/predicted path contained in the message from the target UE 210 is less than or equal to the specific percent threshold may refer to transmission of the forwarding message that forwards or relays the most recently received message from the target UE 210 among the received messages to the target UE 210/neighboring UEs/RSUs.

Alternatively, in scheme ②, the server 110 may generate a new message containing the most recent location/state (e.g., speed, acceleration, heading, etc.) of the target UE 210 as calculated/predicted by the server, and transmit the new message to the target UE 210/neighboring UEs 310, 320, and 330/servers/RSUs. For example, the server 110 may transmit the new message generated according to scheme ② based on that the difference between the location/predicted path directly calculated/predicted by the server 110 and the location/predicted path contained in the message from the target UE 210 is greater than or equal to the specific percent threshold and/or that the accuracy of the location/predicted path contained in the message from the target UE 210 is less than or equal to the specific accuracy threshold.

Alternatively, in scheme ③, the server 110 may retain the type/kind/format of the most recently received message from the target UE 210 for the complemented message and update only certain data fields/elements. For example, the server 110 may update certain data fields/elements among the data fields/elements contained in the most recent message received from the target UE 210 based on the location/path (and/or speed, acceleration, angular speed/radius, heading, etc.) of the target UE 210 as directly calculated/predicted by the server 110. In this case, the server 110 may only update the certain data fields/elements and use the same type/kind/format as the most recent message received from the target UE 210 to transmit the complemented message to the target UE 210/neighboring UEs 310, 320, and 330/servers/RSUs.

In addition, in scheme ③, when the type of the message configured by updating certain data elements in the existing message from the target UE 210 is an awareness message (e.g., CAM, VAM, BSM, PSM), the server 110 may add, to the complemented message, an indicator that represents/indicates whether the certain data elements in the message were modified by the server 110 and/or what those modified data elements are and transmit the complemented message. Alternatively, the server 110 may transmit both the (most recent) message received from the target UE 210 and the complemented message to the target UE 210/the neighboring UEs 310, 320, and 330/servers/RSUs. For example, the server 110 may transmit both the message from the target UE 210 and the complemented message to to the target UE 210/the neighboring UEs 310, 320, and 330/servers/RSUs, or transmit a single message (e.g., merged message) obtained by combining the two messages to the target UE 210/the neighboring UEs 310, 320, and 330/servers/RSUs. Alternatively, in order to reduce message size, the merged message may indicate only the amount of change for the updated data elements (with respect to the previous data value).

Furthermore, in the case of type ③, the UE ID (e.g., Station ID included in the ITS PDU header according to the ETSI ITS standard, or TemporaryID from SAE J2735 DE) contained in the complemented message (or merged message) may be the UE ID of the target UE 210 as contained in the message from the target UE 210, or may be an ID allocated to the server 110 and different from the UE ID of the target UE 210. For example, when both the message from the target UE 210 and the complemented message are transmitted as described above, the complemented message may include an ID allocated to the server 110 rather than the UE ID of the target UE 210. In this case, the message from the target UE 210 and the complemented message may be distinguished based on the contained ID. Alternatively, the server 110 may determine whether to transmit both the message from the target UE 210 and the complemented message based on whether the difference between the updated and original values of some data elements is greater than or equal to a preset threshold. For example, when the difference between the updated values of the data elements and the original values of the data elements is greater than or equal to the preset threshold, the server 110 may transmit both messages. When the difference between the updated values of the data elements and the original values of the data elements is less than the preset threshold, the server 110 may transmit only the complemented message.

When the server 110 generates information about each of at least one UE according to schemes ① to ③, the server 110 may generate and transmit a single merged message containing information about the the at least one target UE, if at least one of the following conditions is satisfied. Here, the at least one target UE may be a UE whose location/predicted path needs to be calculated directly by the server 110 (e.g., a UE satisfying the above-mentioned conditions '1' to '6'), as described above.
- The number of messages received by the server 110 from different target UEs during a specific (preset) time interval is greater than or equal to a specific threshold.
- When the (preset) number of the at least one target UE (e.g., the number of UEs for which it is determined that the difference between the locations predicted by the server 110 and the locations of the UEs contained in the message from the UEs during a specific time interval is beyond an allowable error range) is greater than or equal to a specific threshold.

The single merged message containing information about the location/predicted path of the at least one or multiple target UEs may be generated based on the following methods:
- Concatenating multiple messages each containing individual UE information (e.g., location/path information related to each of the multiple target UEs) in sequence (Message concatenation)
- The single merged message may contain content (e.g., a common data frame/field/element or bit) that is duplicated among messages of the multiple target UEs only once, and may individually contain content that is not duplicated among the messages of the multiple target UEs. Here, different content may be represented as a differential of the values/bits contained in the other messages relative to the values/bits contained in one of the messages (Message aggregation).

When the multiple target UEs share common characteristics in terms of speed/acceleration/heading/location (e.g., values related to speed/location/angular speed/heading direction are identical or their differences are within a specific threshold), the multiple target UEs may be treated as a single group/cluster, and the single merged message may be generated as a message containing information corresponding to the group/cluster (Clustering).

The server 110 may generate a single merged message containing sensor information or event information related to each of the multiple target UEs. For example, the server 110 may convert individual information (speed/location/path, etc.) related to each of the multiple target UEs into object-shape information detected through sensors, and generate the single merged message (e.g., Collective Perception Message (CPM)) containing information about the multiple objects corresponding to the multiple target UEs. Alternatively, the server 110 may generate a single merged message (e.g., Decentralized Environmental Notification Message (DENM)) containing information about an event related to at least two of the multiple target UEs.

In the generation/modification of a message based on scheme "②" as described above, the server 110 may decode/analyze the received message from the target UE 210, and calculate/predict the (current/latest) characteristics/status (e.g., location/speed/acceleration/heading/device type (e.g., vehicle/bicycle/pedestrian)) of the UE based on information acquired from the neighboring UEs 310, 320, and 330/RSUs and/or available learning/AI algorithms in the server 110. In this case, if the server 110 determines that the characteristics information about the UE contained in the message from the target UE 210 is inaccurate or needs to be corrected, it may generate a new message containing the most recent characteristics/status of the target UE 210 as calculated/identified by the server, and transmit the generated new message to the target UE 210/neighboring UEs/server 110/RSUs.

That is, the characteristics/information about the target UE 210 determined/calculated/corrected by the server 110 and contained in the new message transmitted to the target UE 210/neighboring UEs/server 110/RSUs may not be limited to the location and predicted path. Also, the case where "the information (e.g., location/speed/acceleration/heading/device type (e.g., vehicle/bicycle/pedestrian)) contained in the message sent by the target UE 210 is determined to be inaccurate or need to be corrected" may be a condition that triggers the server 110 to generate a new message and/or a condition that triggers transmission of the new message. Furthermore, in this case, the new message does not contain information about the characteristics/location/path of the server 110. Thus, it may be of a different type from an awareness message (e.g., CAM (Common Awareness Message), BSM (Basic Safety Message), VAM (Vulnerable Road User Awareness Message), or PSM (Personal Safety Messaging)) of the target UE 210 for identifying the transmission entity of the message. For example, the new message may be generated as a type of a Collective Perception Message (CPM) or Decentralized Environmental Notification Message (DENM) containing information about other recognized/sensed objects rather than the awareness message

Alternatively, in the generation/modification of a message based on scheme "③" as described above, the server 110 may decode/analyze the received message from the target UE 210, and calculate/predict the (current/latest) characteristics/status (e.g., location/speed/acceleration/heading/device type (e.g., vehicle/bicycle/pedestrian)) of the UE based on the status information about the target UE acquired from other neighboring UEs/RSUs and/or available learning/AI algorithms in the server 110. In this case, if the server 110 determines that the characteristics information about the UE contained in the message from the target UE 210 is inaccurate or needs to be corrected, the server 110 may update only some data field/element that needs to be corrected/modified in the message from target UE 210 based on the most recent characteristics/status calculated/identified by the server, and transmit an updated message of the target UE 210, i.e., a complemented message, to the other neighboring UEs 310, 320, and 330/server/RSUs (as a message of the same type). Here, the case where "it is determined that the information (e.g., location/speed/acceleration/heading/device type (e.g., vehicle/bicycle/pedestrian)) contained in the message from the target UE 210 is inaccurate or needs to be corrected" and/or the case where "the server 110/MEC updates some data fields/elements contained in the specific message" may serve as conditions that should be satisfied in order for the server 110 to transmit the complemented message.

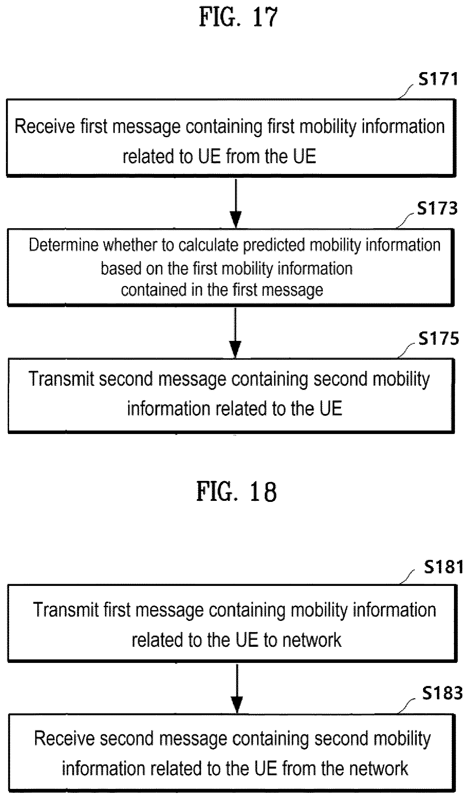

FIG. 17 is a diagram illustrating a method of transmitting a message by a network based on predicted information directly predicted by the network regarding the location/predicted path of a UE.

Referring to FIG. 17, the network may receive a first message containing first mobility information related to a UE from the UE (S171). Here, the first mobility information may include information such as a location, speed, acceleration, heading, device type, and/or predicted path measured/calculated by the UE. The first message may be of a message type such as CAM (Common Awareness Message), BSM (Basic Safety Message), VAM (Vulnerable road user Awareness Message), or PSM (Personal Safety Messaging), which identifies the UE as the transmission entity of the message.

The network may determine whether to calculate predicted mobility information based on the first mobility information contained in the first message (S173). For example, the network may calculate the predicted mobility information when the processing capability/accuracy related to prediction of the location and path of the UE determined/recognized based on the first mobility information is less a specific capability/accuracy threshold, or when the change in angular speed or change in acceleration calculated based on the first mobility information is greater than or equal to a specific change threshold (i.e., the UE satisfies at least one of the aforementioned conditions "1" to "6"). Alternatively, even when the predicted path of the UE is not included in the first mobility information, the calculation of the predicted mobility information may be triggered. In other words, when the UE satisfies at least one of the aforementioned conditions "1" to "6," the network may directly calculate/predict the predicted mobility information related to the UE based on the first message, messages from other UEs containing information related to the UE, and/or messages from the RSUs.

In the case where the UE does not satisfy any of the aforementioned conditions "1" to "6," the network may forward/relay the first message to the UE/neighboring UEs without calculating the predicted mobility information related to the UE.

When the predicted mobility information is calculated, the network may determine whether to perform an update (modification/complementation) of the first mobility information contained in the first message, based on whether the error (or difference) between the predicted mobility information and the first mobility information is greater than or equal to a specific threshold error. When the error is greater than or equal to the specific error threshold, the network may update the first mobility information based on the predicted mobility information. For example, the network may perform an update operation that modifies/complements at least one data element with an error greter than or equal to the specific error threshold among the data elements included in the first mobility information, using at least one value determined/calculated by the network. Alternatively, when the error is less than the specific error threshold, the network may skip the update of the first mobility information. Here, the specific error threshold may be determined based on the movement speed of the UE, the congestion level of neighboring UEs, and/or the amount of change in angular speed of the UE. For example, the specific error threshold may be determined to a lower value when the congestion level of the neighboring UEs is higher than or equal to a preset congestion level, than when the congestion level of the neighboring UEs is lower than the preset congestion level. Alternatively, the specific error threshold may be determined to a higher value when the amount of change in angular speed of the UE is greater than or equal to a preset threshold, compared to when the amount of change in angular speed of the UE is less than the preset threshold.

Next, the network may transmit a second message containing second mobility information related to the UE (S175). In this case, the type/kind of the second message may be determined as a first type or a second type based on whether the second mobility information is the same as the first mobility information. For example, in the case where the network has performed an update of the first mobility information based on the predicted mobility information (i.e., it has calculated the predicted mobility information and updated the first mobility information based thereon), the second mobility information may include mobility information different from the first mobility information. In the case where the update of the first mobility information is skipped, the second mobility information may include the same mobility information as the first mobility information.

In the case where the second mobility information includes different mobility information from the first mobility information (i.e., the first mobility information is updated), the network may determine the type of the second message to be a second type, which is different from the type (i.e., first type) of the first message. On the other hand, in the case where the second mobility information includes the same mobility information as the first mobility information (i.e., the update of the first mobility information is skipped), the network may determine the type of the second message to be the first type that is the same as that type of the first message. Here, the message of the first type may be one of a CAM, a BSM, a VAM or a PSM. The message of the second type may be one of a CPM or a DENM.

Alternatively, when the type of the second message is determined as the second type, the network may include the second mobility information in the second message as object information detected by sensors, etc. Additionally, the network may further include in the second message indication information/an indicator indicating that the second message is related to the first message (e.g., all or part of the identifier of the UE that has transmitted the first message). In this case, neighboring UEs may identify, based on the indication information/indicator contained in the second message, that the transmission entity in the 1st must be transmitted by the UE is identical to the object corresponding to the object information contained in the second message.

On the other hand, in the case where the second message contains the second mobility information that is the same as the first mobility information (or the update of the first mobility information is skipped), the network may determine the type of the second message to be the first type that is the same as the type of the first message (e.g., the message type used to recognize the UE that is the transmission entity of the first message). When the type of the second message is determined to be the first type, the second message may be determined to be the same kind of first-type message as the first message. For example, when the first message is a CAM, the second message may also be a CAM.

For example, when the second mobility information configured by updating the first mobility information is included in the second message, the network may convert the second mobility information into object information and add the object information in the second message as the second message of a second type. In this case, the network may transmit a CPM, which is the second message of the second type that contains the object information as the second mobility information, to the UE and/or neighboring UEs around the UE. Additionally, the network may include in the second message indication information indicating that the second message is a message generated based on the first message. In this case, the neighboring UEs may recognize, based on the indication information, that the UE identified based on the first mobility information in the first message (e.g., the UE may transmit the first message to both the network and the neighboring UEs) is the same as the UE identified based on the second mobility information in the second message.

If the network simply forwards/relays the first message received from the UE, it is generally required to transmit a message of the same type as the first message. However, if the message of the same type is allowed to be transmitted even after part of the contents of the first message is modified, it may raise issues regarding security/reliability of the first message. Therefore, when the network forwards mobility information configured by modifying/complementing the mobility information contained in the first message to neighboring UEs using the second message, it may transmit the modified/complemented mobility information to the UE and neighboring UEs using the second message of a type that is distinguished from the type of the first message. Thereby, modification/complementation by the network may be prevented from causing issues related to the reliability/security of the first message. In addition, by converting the mobility information in the first message into object information detected through sensors, etc., and transmitting the object information using a message of a type such the CPM or DENM, the network may be allowed to use existing message types without the need to define a new message type.

FIG. 18 is a diagram illustrating a method of receiving a message from a network by a UE.

Referring to FIG. 18, a UE may transmit a first message containing first mobility information related to the UE to a network (S181). Here, the first mobility information may include information such as a location, speed, acceleration, heading, device type, and/or predicted path measured/calculated by the UE.

Next, the UE may receive a second message from the network, the second message containing second mobility information related to the UE (S183). The second message may either contain the first mobility information or contain the second mobility information configured by partially modifying/updating the first mobility information. For example, when the network determines, based on the first message, that the UE satisfies one or more of conditions "1" to "6" described above, the second message may contain the second mobility information. For example, the UE may satisfy the conditions "1" to "6" when the processing capability related to prediction of the location and path of the UE is below a specific capability threshold, or when the amount of change in angular speed or acceleration of the UE calculated based on the first mobility information is greater than or equal to a specific change threshold.

In this case, the type/kind of the second message may be determined as a first type or second type based on whether the second message contains second mobility information that is an update of the first mobility information (or whether the second mobility information is the same as the first mobility information). For example, when the second mobility information includes mobility information different from the first mobility information (or when the second mobility information is configured by updating the first mobility information), the UE may receive the second message of a second type that is intended to deliver object or event information detected by the transmission entity of the message. In this case, the UE may acquire the second mobility information based on the object information (about an object detected by sensors) or event information in the second message. Alternatively, when the second mobility information includes the same mobility information as the first mobility information, the UE may receive the second message of a first type, which is a message type for recognizing the transmission entity of the message. Here, the second type may be a message type such as CPM or DENM, while the first type may be a message type such as CAM, BSM, VAM, or PSM.

As described, when the network modifies/complements the first message received from the UE and delivers the modified/complemented message to neighboring UEs, it may transmit the first message modified/complemented to the message type (the second type) (from the observer's perspective) that differs from the original type (the first type). Thereby, the first message modified/complemented within the scope of the existing defined message types may be transmitted without the need to define a new message type (i.e., one for the modified/complemented messages).

Moreover, as it is ensured that the location/predicted path of the UE whose accuracy is at or higher than a specific level is provided to neighboring UEs, the quality of specific services such as collision detection based on a message containing the location/predicted path of the UE may be significantly improved.

It is apparent that the examples of the above-described proposed methods can also be included as implementation methods of the present disclosure and may thus be considered as types of proposed methods. The content of the present disclosure is not limited to uplink or downlink communications and may also be applied to direct communication between UEs. In such cases, a base station or relay node may use the proposed methods. Also, while the term UE refers to a user's terminal. However, a network device such as a base station may be considered as a type of UE when it transmits/receives signals according to a communication scheme between UEs. Rules may be defined such that information about the applicability of the above-described proposed methods (or information about the rules of the above-described proposed methods) may be delivered from a BS to a UE or from a transmitting UE to a receiving UE through a predefined signal (e.g., a physical layer signal or a higher layer signal).The various embodiments disclosed herein may be combined with each other.

Hereinafter, a device to which various embodiments of the present disclosure are applicable will be described. It should be understood that the various descriptions, functions, procedures, proposals, methods, and/or sequences of operations disclosed in the present disclosure are not limited to the disclosed embodiments, and may be applicable to various fields requiring wireless communication and/or connection between devices (e.g., 5G). Hereinafter, specific examples will be described in more detail with reference to the drawings. In the following drawings/descriptions, unless otherwise stated, the same reference numerals may represent the same or corresponding hardware blocks, software blocks, or functional blocks.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

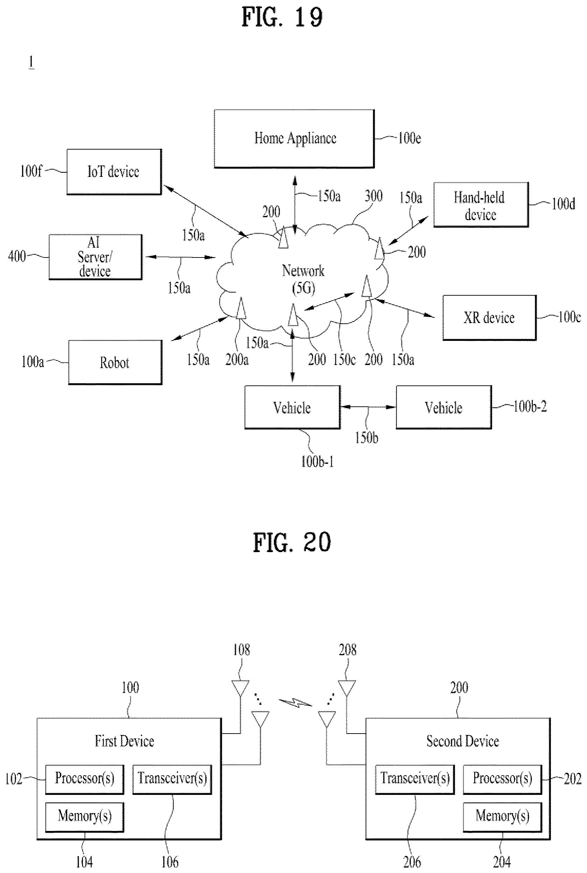

FIG. 19 illustrates a communication system applied to the present disclosure.

Referring to FIG. 19, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 20 illustrates a wireless device applicable to the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or network 100 may include a processor 102 connected to the transceiver 106, and a memory 104. The memory 104 may include at least one program for performing operations related to the embodiments described with reference to FIGS. 17 to 19.

The processor 102 may control the transceiver 106 to receive a first message from a UE, the first message containing first mobility information related to the UE, and to transmit a second message containing second mobility information related to the UE based on the first message, wherein a type of the second message may be determined based on whether the second mobility information comprises same mobility information as the first mobility information.

Alternatively, a processing device including a processor 102 configured to control a network to transmit messages, and a memory 104 may be configured. In this case, the processing device may include at least one processor and at least one memory connected to the processor and storing instructions, wherein the instructions, when executed by the at least one processor, cause the UE to receive a first message containing first mobility information related to the UE, and to transmit a second message containing second mobility information related to the UE based on the first message, wherein a type of the second message may be determined based on whether the second mobility information comprises same mobility information as the first mobility information.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or UE 200 may include a processor 202 connected to a transceiver or RF transceiver 206, and a memory 204. The memory 204 may include at least one program for performing operations related to the embodiments described with reference to FIGS. 17 to 19.

The processor 202 may control the transceiver 206 to transmit a first message containing first mobility information related to the UE to the network and to receive a second message containing second mobility information related to the UE, wherein a type of the second message may be determined based on whether the second mobility information comprises same mobility information as the first mobility information.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

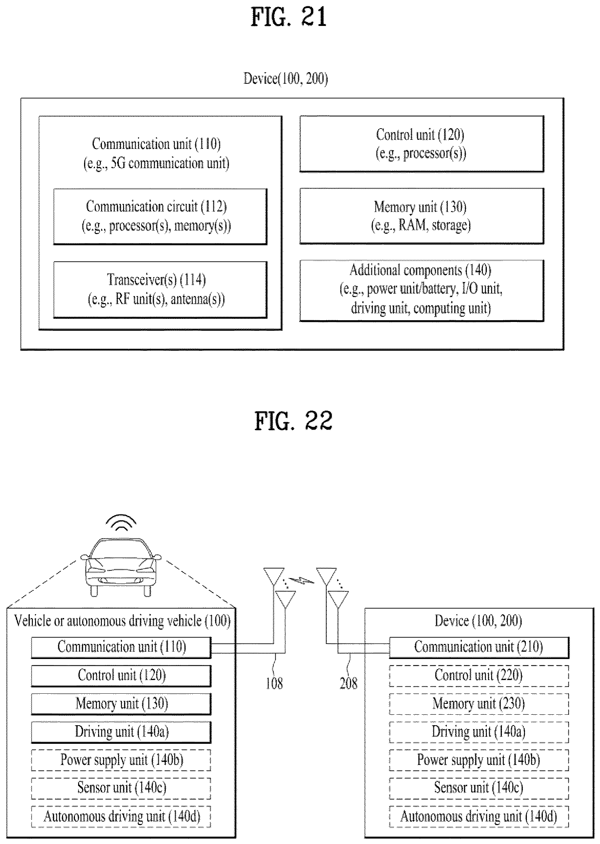

FIG. 21 illustrates another example of a wireless device applied to the present disclosure. The wireless device may be implemented in various forms according to a use-case/service (refer to FIG. 19)

Referring to FIG. 21, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 22 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultraacoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### [Industrial Applicability]

The above-described embodiments of the present disclosure are applicable to various mobile communication systems.

## Claims

1. A method of transmitting a message by a network in a wireless communication system, the method comprising:
receiving a first message containing first mobility information related to a user equipment (UE) from the UE; and
transmitting a second message containing second mobility information related to the UE based on the first message,
wherein a type of the second message is determined based on whether the second mobility information comprises same mobility information as the first mobility information.

2. The method of claim 1, wherein the type of the second message is determined to be a first type for recognition of a transmission entity of the message, or a second type for delivering object information or event information detected by the transmission entity of the message.

3. The method of claim 2, wherein, based on the second mobility information being different from the first mobility information, the type of the second message is determined to be the second type,
wherein the second message contains the second mobility information converted into the object information detected by a sensor.

4. The method of claim 2, wherein, based on the second mobility information comprising the same mobility information as the first mobility information, the type of the second message is determined to be the first type same as a type of the first message.

5. The method of claim 1, wherein, based on the second mobility information being different from the first mobility information, the second message further contains indication information indicating that the second message is related to the first message.

6. The method of claim 2, wherein the message of the first type is a Common Awareness Message (CAM), Basic Safety Message (BSM), Vulnerable Road User Awareness Message (VAM), or Personal Safety Messaging (PSM),
wherein the message of the second type is a Collective Perception Message (CPM) or Distributed Environmental Notification Message (DENM).

7. The method of claim 1, further comprising:
calculating predicted mobility information related to the UE based on the first message and a third message received from devices around the first UE; and
based on a difference between the predicted mobility information and the first mobility information being greater than or equal to a specific threshold, updating the first mobility information with the predicted mobility information.

8. The method of claim 7, wherein the calculating of the predicted mobility information is performed based on that a processing capability related to prediction of a location and path of the UE is less than a specific capability threshold, or that a change in angular speed or acceleration of the UE calculated based on the first mobility information is greater than or equal to a specific change threshold.

9. A computer-readable recording medium having recorded thereon a program for executing the method of claim 1.

10. A network for transmitting a message in a wireless communication system, comprising:
a radio frequency (RF) transceiver; and
a processor connected to the RF transceiver,
wherein the processor is configured to control the RF transceiver to perform operations comprising:
receiving a first message containing first mobility information related to a user equipment (UE) from the UE; and
transmitting a second message containing second mobility information related to the UE based on the first message,
wherein a type of the second message is determined based on whether the second mobility information comprises same mobility information as the first mobility information.

11. A processing device for controlling a network to transmit a message in a wireless communication system, comprising:
at least one processor; and
at least one memory connected to the at least one processor and storing instructions,
wherein, based on the instructions being executed by the processor, the instructions cause the network to perform operations comprising:
receiving a first message containing first mobility information related to a user equipment (UE) from the UE; and
transmitting a second message containing second mobility information related to the UE based on the first message,
wherein a type of the second message is determined based on whether the second mobility information comprises same mobility information as the first mobility information.

12. A method of receiving a message from a network by a user equipment (UE) in a wireless communication system, the method comprising:
transmitting a first message containing first mobility information related to the UE to the network; and
receiving a second message containing second mobility information related to the UE,
wherein a type of the second message is determined based on whether the second mobility information comprises same mobility information as the first mobility information.

13. A computer-readable recording medium having recorded thereon a program for executing the method of claim 12.

14. A user equipment (UE) for receiving a message from a network in a wireless communication system, comprising:
a radio frequency (RF) transceiver; and
a processor connected to the RF transceiver,
wherein the processor controls the RF transceiver to perform operations comprising:
transmitting a first message containing first mobility information related to the UE to the network; and
receiving a second message containing second mobility information related to the UE,
wherein a type of the second message is determined based on whether the second mobility information comprises same mobility information as the first mobility information.

15. A processing device for controlling a user equipment (UE) to receive a message from a network in a wireless communication system, comprising:
at least one processor; and
at least one memory connected to the at least one processor and storing instructions,
wherein, based on the instructions being executed by the at least one processor, the instructions cause the UE to control an RF transceiver through the processor to perform operations comprising:
transmitting a first message containing first mobility information related to the UE to the network; and
receiving a second message containing second mobility information related to the UE,
wherein a type of the second message is determined based on whether the second mobility information comprises same mobility information as the first mobility information.
